# EUROPÄISCHE PATENTANMELDUNG

(11) **EP 1 089 107 A1**
(43) Veröffentlichungstag der Anmeldung: **04.04.2001**
(21) Anmeldenummer: 00120997.2
(22) Anmeldetag: 27.09.2000
(51) Int. Cl.: G02B 21/18, G02B 21/22

(54) **Stereomikroskop**

(30) Priorität: 28.09.1999 CH 178999
(71) Anmelder: Leica Microsystems AG, 9435 Heerbrugg (CH)
(72) Erfinder: Corbisiereo, Dennis, Rocksaway, NY 07866 (US); Sander, Ulrich, 9445 Rebstein (CH); Savanayana, Ohm, 9434 Au (CH); Suhner, Heinz, 9445 Rebstein (CH)
(74) Vertreter: Reichert, Werner F., Dr.

(57) **Zusammenfassung**

Die Erfindung betrifft ein Stereomikroskop (1) mit einem Hauptkörper(3) und einer Schnittstellenvorrichtung(2), die mit dem Hauptkörper(3) und/oder mit einem Zubehör(4) nur schwer lösbar oder unlösbar verbunden ist und nach Art eines Drehlagers (5) eine Relativdrehung des Zubehörs(4) zum Hauptkörper(3) erlaubt.

## Beschreibung

Die Erfindung betrifft ein Stereomikroskop mit einer Schnittstelle bzw. einer Anschlussvorrichtung, an der Zubehör montiert werden kann.

Ein von der Anmelderin entwickeltes und bewährtes Mikroskop 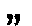 M841" verfügt über zwei voneinander unabhängige Stereostrahlengänge mit je einem eigenen Zoom und mit einem gemeinsamen Hauptobjektiv. Die beiden Strahlengänge sind in rechtem Winkel zueinander angeordnet, sodass ein Assistent einem Operateur bei der Arbeit am Operationsfeld unmittelbar zusehen kann. Durch die Unabhängigkeit der beiden Strahlengänge kommt es dabei zu keinerlei Lichtverlusten, sodass sowohl Operateur als auch Assistent ein optimal beleuchtetes Operationsfeld sehen. Das M841 wird häufig auch für Augenoperationen eingesetzt. Der Assistententubus wird dabei an einer relativ ausladenden Brücke seitlich des Hauptkörpers des Mikroskops und somit seitlich des Kopfes eines Patienten gehalten.

Je nachdem, ob das rechte oder das linke Auge operiert wird, wird der Assistententubus einmal links und das andere Mal rechts vom Kopf des Patienten benötigt, während der Operateur stets vor dem Kopf des Patienten sitzt und seinen Operateurtubus etwa in der Verlangerung des Kopfes positioniert hat.

Ein Wechseln von der rechten auf die linke Position des Assistententubus erfolgt normalerweise wie folgt:
a) Entfernen des Operateurtubus;
b) Entfernen der Assistentenbrücke;
c) Neumontage der Assistentenbrücke, aber um 180° um die optische Achse des Hauptobjektivs geschwenkt versetzt;
d) Neumontage des Operateurtubus.

Dieser Wechselvorgang ist zeitaufwendig und erfordert einiges Geschick. Häufig versuchen daher Hilfskräfte, den Wechsel einfacher und schneller zu gestalten.

Sie überspringen dabei die Stufe a) und versuchen den ganzen Aufbau in einem zu entfernen und entsprechend den Schritten b) und c) neu zu montieren. Dieser 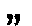 Schnellwechsel" erfordert besonderes Geschick und entspricht nicht der vom Hersteller vorgesehenen Routine.

Der Erfindung liegt die Aufgabe zugrunde, das Problem zu lösen und den Umbau der Brücke bzw. des Assistententubus einfacher und schneller zu gestalten.

Gelöst wird diese Aufgabe erstmals zufriedenstellend durch die Anwendung der Merkmale des Anspruches 1.

In der Literatur sind zwar schon Mechanismen bekannt, die ein Verschwenken einer Tubenvorrichtung um eine optische Achse ermöglichen, jedoch erfolgt dies dort zu einem anderen Zweck und mit anderen Mitteln.

Das deutsche Patent DE 3333471C2 beschreibt - wie schon zuvor die artverwandte DE 1217099 B - beispielsweise einen Aufbau zur Simultanbeobachtung für einen ersten und einen zweiten Beobachter, bei dem zwei Stereomikroskope so zueinander angeordnet sind, dass beide Beobachter auf dasselbe Operationsfeld blicken. Dabei werden beide Hauptachsen über einen Strahlenteilerspiegel ineinander gelegt und auf das Operationsfeld gerichtet. Dieser Aufbau ermöglicht die Rotation der beiden Mikroskope um die optische Achse, ohne dass justiert werden muss; d.h. der Operateur kann die für ihn bevorzugte Winkelposition seines Tubus zum Patienten wählen und der Assistententubus wird entsprechend nachgeführt. Damit lassen sich somit auch Positionen an diametralen Seiten eines Patienten einnehmen.

Der Aufbau umfasst dabei allerdings den Operateurtubus mit dem ersten Mikroskop, darunter den Aufbau mit dem Strahlenteiler und ein damit verbundenes zweites Mikroskop für den Assistenten. Der Aufbau mit dem Strahlenteiler ist gegenüber dem ersten Mikroskop um dessen Hauptachse drehbar.

Aus diesem Aufbau ergibt sich keine Problematik hinsichtlich der Geschwindigkeit einer gewünschten Positionsveränderung und auch kein nennenswerter Montagebedarf, da der 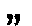 Aufbau" (bzw."Unterbau") im wesentlichen für den Anwender unlösbar mit dem ersten Mikroskop verbunden ist und da der 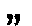 Aufbau" unterhalb des Mikroskops hängt. Andererseits ist dieser bekannte Aufbau jedoch nicht universell einsetzbar, da beide Mikroskope immer miteinander verbunden sind.

Abgesehen von obigem hat diese bekannte Lösung jedoch einen schweren Nachteil: Sie baut aufgrund der doppelten Mikroskope groß und ist schwer. Sie führt ― in Abhängigkeit von der Auslegung des Teilerspiegels ― nachteiligerweise zu einer Helligkeitsreduktion sowohl für den Operateur als auch für den Assistenten. Das hohe Gewicht wirkt sich insbesondere negativ aus, wenn das Mikroskop - wie im Operationsaal üblich - an einem Stativ montiert ist. Hohe Gewichte führen dabei zu hohen Ausgleichsgewichten und damit insgesamt zu einer Hochlagerung des Schwerpunktes des Stativs. Eine Hochlagerung des Schwerpunktes verschlechtert allerdings das Kippverhalten, sodass man ein solches Hochlagern des Schwerpunktes tunlichst vermeiden möchte.

Dieser Nachteil ist bei einer besonderen Ausgestaltung der Erfindung dank zweier unabhängiger Strahlengänge in einem Mikroskop vermieden.

Die Erfindung wird durch die Summe der Merkmale im Anspruch 1 angegeben.

Weitere Ausgestaltungen der Erfindung und Varianten dazu sind in den Unteransprüchen angegeben.

Selbstverständlich ist die für die Aufnahme des Assistententubus ausgebildete Brücke mit einem Anschluss für den Operateurtubus ausgerüstet, wobei, wie an sich bekannt, an den Anschlüssen der Brücke auch beliebige bekannte weitere Module anschliessbar sind.

Unter Schrauben im Sinne der Erfindung sind sämtliche Bauelemente zu verstehen, die eine Arretierung zwischen zwei Bauelementen ermöglichen. Darunter fallen somit auch Kniehebelspanner, o.dgl.

An Hand von Zeichnungen sind zwei Ausführungsbeispiele der Erfindung näher dargestellt.
- Fig.1: zeigt ein Mikroskop mit aufgesetzter Brücke und erfindungsgemässer Schnittstellenvorrichtung;
- Fig.2: die Brücke mit unverlierbar montierter Schnittstellenvorrichtung;

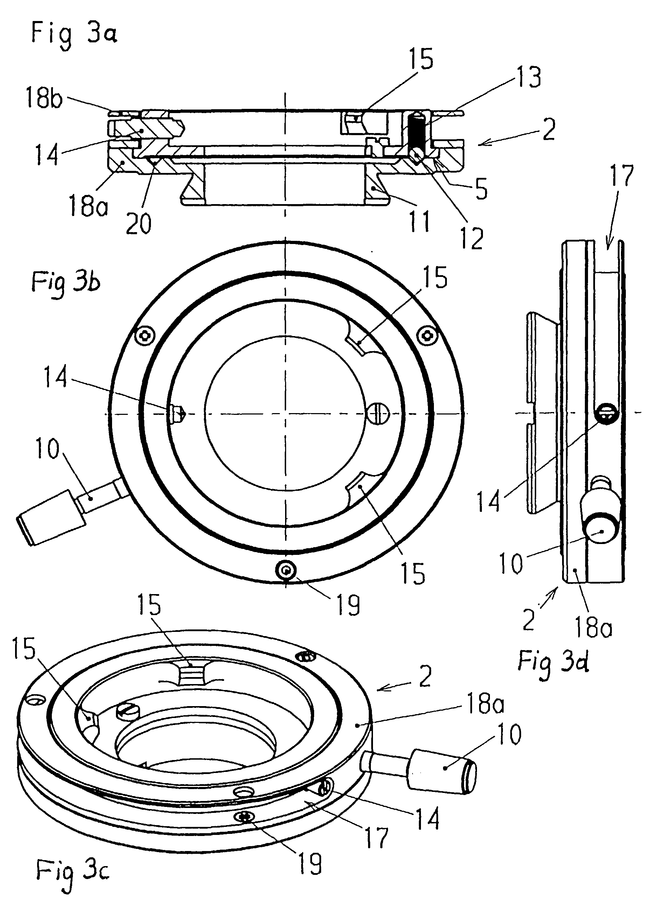

- Fig.3: die erfindungsgemässe Schnittstellenvorrichtung in verschiedenen Ansichten und
- Fig.4: ein zweites Ausführungsbeispiel mit scharnierartiger Schnittstelle.

Die Figuren werden übergreifend und zusammenhängend beschrieben. Sie schränken die Erfindung nicht ein, sondern dienen nur als Beispiele für die durch die Ansprüche unter Schutz gestellten Aufbauten. Die Bezugszeichenliste ist zusammen mit dem Offenbarungsgehalt der Patentansprüche als integrierender Bestandteil der Beschreibungseinleitung zu verstehen.

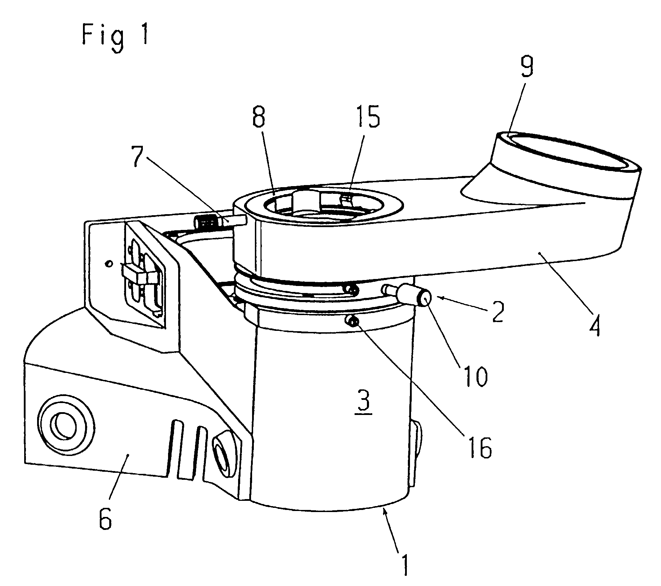

Ein herkömmliches Mikroskop, z.B. ein Operationsmikroskop 1, umfasst einen Hauptkörper 3 und ein Gehäuse 6, das in Fig.1 seitlich ausgebaucht ist und beispielsweise eine Mikroskopbeleuchtung enthält. Der Hauptkörper 3 hat an seinem oberen Ende einen Anschluss für eine erfindungsgemässe Schnittstellenvorrichtung 2. Der Anschluss entspricht einem herkömmlichen Montagekonus-Anschluss. Neu an diesem Anschluss ist, dass er durch eine schwer entfernbare Arretierschraube 16 mit der Schnittstellenvorrichtung 2 verbunden ist. Die schlechte Entfernbarkeit kann erzielt werden durch eine besondere Ausbildung des Schraubenkopfes, dessen Betätigung z.B. ein Spezialwerkzeug erfordert, durch eine Abdeckung für die Schraube oder überhaupt durch eine Unbenutzbarkeitsmachung der Schraube, sodass die Schnittstellenvorrichtung 2 immerwährend fest mit dem Hauptkörper 3 verbunden ist.

Die Schnittstellenvorrichtung 2 besteht im wesentlichen aus zwei ringförmigen, zueinander drehbaren Teilen 18a und 18b, die nach Art eines Drehlagers miteinander verbunden sind. Im unteren Bereich ist der untere Teil 18a als Montagekonus 11 ausgebildet. Der innere Teil 18b ist seinerseits als Anschlussvorrichtung für einen Montagekonus ausgebildet und umfasst demzufolge Rastnasen 15 und eine Arretierschraube 14, die bevorzugt - ebenso wie die Schraube 16 - nur schwer bedienbar, abgedeckt oder zugriffserschwert bzw. bedienungserschwert ist.

In der Praxis könnte der äussere Teil 18a mit dem inneren Ring 18b auch vertauscht angeordnet sein, sodass der äussere Ring 18a oben mit einem Zubehör verbunden werden kann und der innere Ring unten.

Der äußere Teil 18a weist eine Freistellung 17 auf, in der die Arretierschraube 14 ein Spiel in Drehrichtung der beiden Teile 18a und 18b zueinander aufweist. Das Spiel ist genau so gross, wie man die Drehbarkeit des Zubehörteiles haben möchte. Im gezeigten Fall handelt es sich um ein Spiel von ca. 180°.

Aus Montagegründen ist der äussere Teil 18a zweigeteilt. Die beiden Teile sind durch Schrauben 19 verbunden, könnten aber auch vernietet, verklebt oder einstückig ausgeführt sein. Die Drehbewegung zwischen dem äusseren Teil 18a und 18b kann durch eine Arretierschraube 10 gebremst bzw. unterbunden werden. Zur Arretierung ist bei dem vorliegenden Ausführungsbeispiel bevorzugt auch ein Rastmechanismus vorgesehen. Eine Rastkugel 12, die durch eine Rastfeder 13 beaufschlagt ist, verrastet mit gegengleichen Rastausnehmungen 20 in den bevorzugten Positionen bzw. bevorzugten Drehstellungen der beiden Teile 18a und 18b zueinander. Diese Positionen sind, wie beim eingangs geschilderten Fall eines Ophthalmo-Operationsmikroskops, um einen 180°- Drehwinkel zueinander versetzt.

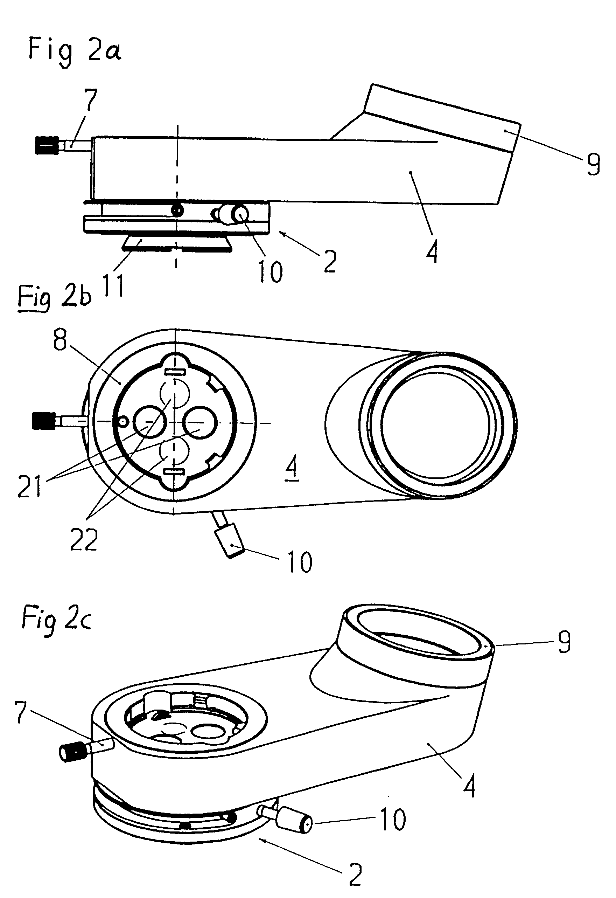

In Fig. 2 sieht man eine bevorzugte Ausführungsform der Erfindung, bei der die Schnittstellenvorrichtung 2 mit einer als Zubehör dienenden Brücke 4 fest und nur schwer lösbar verbunden ist.

Die Brücke 4 selbst ist an sich bekannt und verfügt ihrerseits über eine Arretierschraube 7 für den Aufsatz eines Okulartubus oder dgl. Sie verfügt weiters über einen Anschluss 9 für Assistententuben, der nur symbolisch angedeutet ist und gegebenenfalls ebenso über eine Montagekonus-Vorrichtung verfügt.

Eine wichtige Komponente der Erfindung ist somit die zweiteilige Schnittstellenvorrichtung 2, die eine Schwenkdrehung der beiden Teile zueinander gestattet, wobei die beiden Teile im montierten Zustand nach Art eines Drehlagers unlösbar verbunden sind und der eine Teil mit dem Hauptkörper des Mikroskops 3 und der andere Teil mit einem weiteren Zubehör z.B. einem Okulartubus verbindbar ist.

Varianten der Erfindung können dergestalt sein, dass die gesamte Schnittstellenvorrichtung 2 unlösbar mit dem Hauptkörper 3 verbunden ist oder alternativ die gesamte Schnittstellenvorrichtung 2 mit dem Zubehör 4 nicht lösbar verbunden ist. Während bei den beiden letzten Varianten die jeweils freie, nicht starr verbundene Anschlussstelle der Schnittstellenvorrichtung 2 über einen herkömmlichen Anschluss, z.B. einen Montagekonus-Anschluss, und einer Arretierschraube verfügt.

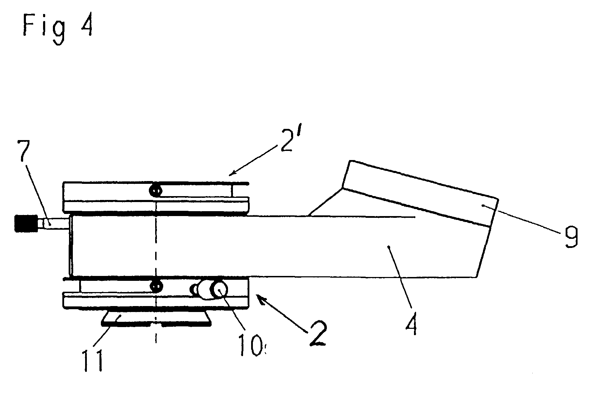

Der besondere Aufbau gemäss Fig.4 sieht vor, dass an der Brücke unten wie oben je eine Schnittstellenvorrichtung 2 bzw. 2' angebracht sind, so dass beim Verdrehen der Brücke 4 jetzt neu die ursprüngliche Position des Mikroskops 3 und allfällige auf der Schnittstelle 2' aufgesetzte Tuben o.dgl. ihre Relativposition beibehalten, ohne irgendwelche Teile trenn- bzw. abnehmbar ausgestalten zu müssen.

Gemäss einer weiteren Ausbildungsvariante können die Teile 2 und 2' miteinander starr verbunden sein, so dass sie eine Art Angel eines Scharniers bilden.

Kombination der dargestellten Merkmale untereinander liegen im Rahmen der Erfindung ebenso, wie Kombinationen der gezeigten Schnittstellen mit beliebigen bekannten Mikroskopteilen oder Zubehörteilen, die bisher schon mit vergleichbaren Schnittstellen je nach Bedarf angeschlossen wurden.

### Bezugszeichenliste

- 1: Stereomikroskop
- 2: Schnittstellenvorrichtung
- 2': zweite Schnittstellenvorrichtung gegebenenfalls verbunden mit der ersten Schnittstellenvorrichtung zu einem scharnierartigen Teil, an dem die Brücke 4 schwenkbar und arretierbar gelagert ist
- 3: Hauptkörper
- 4: Brücke, Zubehörteil
- 5: Drehlager
- 6: Gehäuse
- 7: Arretierschraube für Okulartuben
- 8: Anschluss für Okulartuben
- 9: Anschluss für Assistententuben; kann im Prinzip wie Anschluss 8 aufgebaut sein
- 10: Arretierschraube für Drehung um Hauptobjektiv-Achse
- 11: Montagekonus
- 12: Rastkugel
- 13: Rastfeder
- 14: Arretierschraube für Befestigung am Zubehör(4), wirkt auch als Anschlagstift für Drehbewegung
- 15: Rastnase
- 16: Arretierschraube für Befestigung am Hauptkörper(3)
- 17: Freistellung
- 18a,b: zueinander drehbare Teile
- 19: Schraube
- 20: Rastausnehmungen
- 21: Stereostrahlengänge
- 22: Stereostrahlengang um 90° versetzt; an dieser Stelle befinden sich - im nicht versetzten Zustand - die Umlenkspiegel für das Einspiegeln in den Assistententuben-Strahlengang durch die Brücke 4

## Patentansprüche

1. Stereomikroskop (1) mit einem Hauptobjektiv, einem Hauptkörper (3), der wenigstens einen Stereostrahlengang enthält, und mit einer Schnittstellenvorrichtung (2) am Hauptkörper (3) zur Aufnahme von Zubehör (4), insbesondere zur Aufnahme eines modulartigen Aufsatzes, wie z.B. eine Brücke (4), ein Assistententubus o.dgl. **dadurch gekennzeichnet,** dass die Schnittstellenvorrichtung (2) im nichtmontierten Zustand mit dem Hauptkörper (3) oder mit dem Zubehör (4) unverlierbar verbunden oder unverlierbar verbindbar ist und dass im montierten Zustand das Zubehör (4) über die Schnittstellenvorrichtung (2) mit dem Hauptkörper (3) unverlierbar und nicht ohne weiteres entfernbar verbunden ist, wobei die Schnittstellenvorrichtung (2) ein Drehlager (5) umfasst oder bildet, in dem das Zubehör (4) wenigstens 90°, vorzugsweise ca. 180° um die optische Achse des Hauptobjektivs schwenkbar ist.

2. Mikroskop nach Anspruch 1, **dadurch gekennzeichnet,** dass die Drehstellung des Zubehörs (4) bzw. das Drehlager (5), arretierbar ist.

3. Mikroskop nach Anspruch 1 oder 2, **dadurch gekennzeichnet,** dass das Zubehör (4) in seinen beiden maximal entfernten Drehlagen und wenigstens einer dritten Drehlage im Drehlager (5) bzw. in der Schnittstellenvorrichtung (2) mittels Rastvorrichtung (12) verrastbar bzw. anschlaggeführt ist.

4. Mikroskop nach Anspruch 3, **dadurch gekennzeichnet,** dass die Rastvorrichtung eine federbeaufschlagte Rastkugel (12) aufweist, die mit gegengleichen Rastmulden (20) kooperiert.

5. Mikroskop nach einem der vorhergehenden Ansprüche **dadurch gekennzeichnet,** dass die Schnittstellenvorrichtung (2) als entfernbares Modul ausgebildet ist, das mittels wenigstens einer Schraube (14, 16) am Hauptkörper (3) oder am Zubehör (4) arretierbar ist, wobei die Schraube (14, 16) bzw. der Zugriff zur Schraube (14, 16) abdeckbar, entfernbar oder erschwert ausgeführt ist, sodass die Schraube (14, 16) beispielsweise nur mittels Sonderwerkzeug geöffnet werden kann.

6. Mikroskop nach Anspruch 5, **dadurch gekennzeichnet,** dass das Modul (2) mittels wenigstens einer zweiten Schraube (14, 16) am jeweils anderen Teil (Aufsatz oder Hauptkörper) arretierbar ist, wobei die zweite Schraube (14, 16) bzw. der Zugriff zur Schraube (14, 16) abdeckbar, entfernbar bzw. erschwert ausgeführt ist, sodass die Schraube (14, 16) beispielsweise nur mittels Sonderwerkzeug geöffnet werden kann, und dass eine dritte - gut zugängliche - Schraube (10) für die Arretierung der Drehbewegung zwischen dem Zubehör (4) und dem Hauptkörper (3) vorgesehen ist.

7. Mikroskop nach einem der vorhergehenden Ansprüche, **dadurch gekennzeichnet,** dass der Hauptkörper (3) zwei um die optische Achse des Hauptobjektivs etwa 90° zueinander versetzte Stereostrahlengänge (21, 22) aufweist und dass das Zubehör als Assistentenbrücke (4) aufgebaut ist, die einen der beiden Stereostrahlengänge (21, 22) ungehindert nach oben durchlässt, während er den anderen der beiden Strahlengänge (22, 21) in der arretierten Position der Brücke (4) annähernd lichtverlustfrei in einen Assistententubusanschluss (9) umlenkt.

8. Zubehörteil (4) für ein Mikroskop (1) mit einer Schnittstellenvorrichtung (2) zur Befestigung an dem Mikroskop (1), **dadurch gekennzeichnet,** dass die Schnittstellenvorrichtung (2) am Zubehörteil (4) unverlierbar und nicht ohne weiteres entfernbar fest montiert bzw. fest montierbar ist, dass die Schnittstellenvorrichtung 2) für eine unverlierbare und nicht ohne weiteres entfernbare Montage an einem Mikroskopanschluss ausgerüstet ist, und dass die Schnittstellenvorrichtung (2) um die optische Hauptachse des Mikroskops um einen Drehwinkel von wenigstens 90°, vorzugsweise um einen Drehwinkel von ca. 180° drehbar ist.

9. Schnittstellenvorrichtung an einem Mikroskop nach einem der vorhergehenden Ansprüche, **dadurch gekennzeichnet,** dass die Schnittstelle aus zwei identischen separaten Teilen (2,2') ausgebildet ist, die beidseitig an dem Zubehörteil (4) schwenkbar gelagert sind, sodass ein weiterer Tubus durch das Teil (2') aufnehmbar ist, der dann schwenkbar mit dem Zubehörteil (4) verbunden ist.

10. Schnittstellenvorrichtung nach Anspruch 9, **dadurch gekennzeichnet,** dass beide Teile (2,2') miteinander starr verbunden sind.

11. Schnittstellenvorrichtung nach Anspruch 10, **dadurch gekennzeichnet,** dass, beide Teile (2,2') den Zubehörteil (4) klammerförmig umsschliessen.
